# EUROPÄISCHE PATENTSCHRIFT

(11) **EP 0 466 979 B1**
(45) Veröffentlichungstag und Bekanntmachung des Hinweises auf die Patenterteilung: **05.10.1994**
(21) Anmeldenummer: 90125358.3
(22) Anmeldetag: 22.12.1990
(51) Int. Cl.: G02B 21/00

(54) **Anordnung zur simultanen konfokalen Bilderzeugung**
Arrangement for simultaneous and confocal picture generation
Arrangement pour la génération des images simultanée à foyer commun

(30) Priorität: 21.07.1990 DE 4023292
(43) Veröffentlichungstag der Anmeldung: 22.01.1992
(73) Patentinhaber: Leica Lasertechnik GmbH, D-69120 Heidelberg (DE)
(72) Erfinder: Wijnaendts-van-Resandt, Roelof W., Dr., W-7525 Bad Schönborn (DE)

(56) Entgegenhaltungen:
- WO-A-88/10406
- DE-A- 2 360 197
- DE-C- 3 826 317
- US-A- 4 845 552
- TECHNISCHE RUNDSCHAU, vol. 81, no. 24, 16 Juni 1989, BERN CH, Seiten 69-70 ; Dr. M. HOPPE: "Neues Laser-Scanning-Mikroskop für dreidimensionale Darstellungen"
- JOURNAL OF THE INSTITUTION OF ELECTRONIC AND RADIO ENGINEERS, vol. 55, no. 5, Mai 1985, LONDON GB, Seiten 162-164 ; M.A. BREARLEY : "Prototype scanning laser microscope"

## Beschreibung

Die Erfindung betrifft eine Anordnung zur simultanen konfokalen Bilderzeugung nach dem Oberbegriff des Anspruchs 1.

Eine solche Anordnung ist aus der DE 38 26 317 C1 und den dort genannten Druckschriften in verschiedenen Ausführungen bekannt.

Allen gemeinsam ist, daß je ein bewegtes Lochraster in einer Zwischenbildebene sowohl des Beleuchtungs- als auch des Nachweisstrahlengangs vorgesehen ist, um die Konfokalität zu erreichen. Der Herstellungs- und Justieraufwand ist dadurch beträchtlich. Die Lösung der DE 38 26 317 C1 verringert den Aufwand zwar gegenüber anderen Ausführungen, muß aber dafür eine zeitliche Modulation des Bildes in Kauf nehmen.

Zur Minderung der Probleme mit den mechanisch bewegten Teilen wird in der DE 38 26 317 C1 die Verwendung optronischer Mittel zur Darstellung der bewegten Lochraster vorgeschlagen, als Nachweissystem ist auch eine CCD-Kamera angegeben.

Aus WO 88/10 406 ist ein simultaner chromatischer Profilsensor bekannt, bei dem jedoch keine Abrasterung durch das optische System vorgesehen ist.

Aus WO 88/08 550 (EP-A 362 228) ist ein konfokales Laser-Raster-Mikroskop ohne bewegliche Teile bekannt, bei dem bildseitig auf eine bewegte Blende verzichtet wurde und eine Rasterkamera selektiv ausgelesen wird. Dabei wird jedoch stets nur ein Objektpunkt abgetastet. Von der Verwendung von CCD-Arrays und von simultan konfokalen Anordnungen wird in der Schrift ausdrücklich Abstand genommen.

Es ist Aufgabe der Erfindung, eine gattungsgemäße Anordnung zur simultanen konfokalen Bilderzeugung zu schaffen, die vereinfacht ist und mit möglichst geringen Zusatzeinrichtunen und Eingriffen an konventionelle Einrichtungen zur Bilderzeugung, insbesondere Mikroskope, adaptierbar ist.

Die Lösung dieser Aufgabe gelingt durch die kennzeichnenden Merkmale des Anspruchs 1. Vorteilhafte Ausgestaltungen und Weiterbildungen sind Gegenstand der Ansprüche 2 bis 7.

Mit dem Anspruch 2 ist dabei berücksichtigt, daß konfokale Anordnungen besonders für die Mikroskopie zur Erzielung von Überauflösung und zur Selektion von Schärfenebenen in Objekten vorteilhaft sind. Für die berührungslose Profilvermessung unter Nutzung der chromatischen Aberration sind sie ebenfalls vorteilhaft, was in Anspruch 7 berücksichtigt ist.

Die Erfindung geht aus von der Erkenntnis, daß die direkte Beobachtung eines simultanen konfokalen Bildes mit dem Auge in der Praxis wenig Bedeutung hat und darauf verzichtet werden kann. Rasterkamers und Bildanalysesysteme sind dagegen regelmäßig in Gebrauch.

Dann kann auf die nachweisseitige optische Lochrasterfilterung verzichtet werden und das von einer Rasterkamera aufgenommene Bild kann durch selektives Auslesen oder Verarbeiten einzelner Pixel elektronisch oder softwaremäßig mit einem Lochraster gefiltert werden.

Zur Synchronisierung der Abtastung mit der punktweisen Beleuchtung ist dann eine Messung der Lage des Beleuchtungs-Lochrasters erforderlich, was aber in den Antrieb des Lochrasters integrierbar ist.

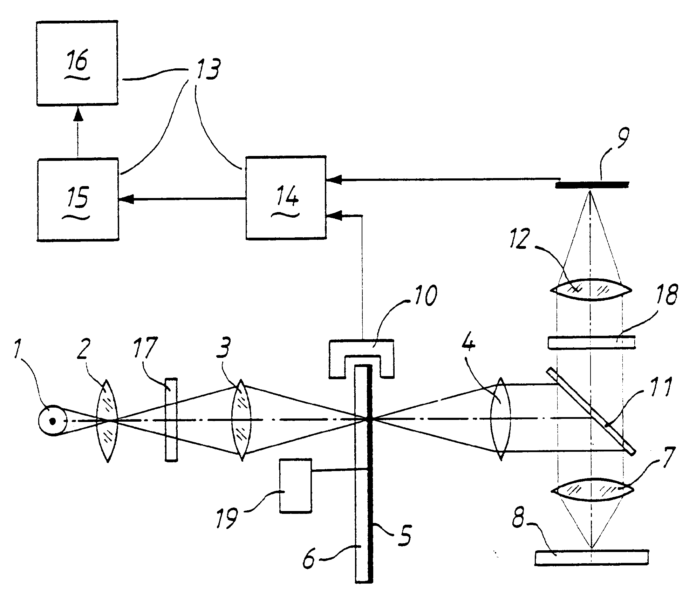

Die Erfindung wird anhand der Zeichnung näher dargestellt.

Eine Lichtquelle 1, z.B. eine Glühlampe, Bogenlampe oder ein Laser, wird über eine Beleuchtungsoptik (2,3,4) mit einer Zwischenbildebene 5, einen Strahlteiler 11 und ein Objektiv 7 auf ein Objekt 8 abgebildet. In der Zwischenbildebene 5 ist eine Lochrasterblende 6, z.B. eine Nipkow-Scheibe, angeordnet, die durch einen Antrieb 19 in der Zwischenbildebene bewegt wird. In der aus der simultanen konfokalen Mikroskopie bekannten Weise werden so im Objekt simultan viele getrennte Punkte fokussiert beleuchtet und seriell alle Punkte gescannt. Der Antrieb 19 ist bei Verwendung einer Nipkow-Scheibe 6 als Drehantrieb ausgelegt, an dessen Drehzahlstabilität keine besondere Anforderungen zu stellen sind. Kompaktere Ausführungen von Lochrasterblende 6 und Antrieb 19 ergeben sich mit oszillierenden Antrieben 19 oder mit in elekrooptischen Arrays vereinigten Funktionselementen für Lochrasterung und Bewegung.

Typischer Lochdurchmesser der Lochrasterblende 6 ist 20µm, der Lochabstand etwa das achtfache und also der Transmissionsgrad etwa 5%. Ein oszillierender Antrieb 19 benötigt dann nur eine Amplitude kleiner als 1mm und die Lochrasterblende 6 ist praktisch so groß im Querschnitt, wie die anderen optischen Elemente 2, 3, 4 im Beleuchtungsstrahlengang. Damit kann die benötigte Zusatzeinrichtung aus Lochrasterblende 6 und Antrieb 19 leicht als austauschbares Modul zum Einsatz in konventionelle Beleuchtungseinrichtungen für Mikroskope und dergleichen ausgeführt werden.

Dargestellt in der Zeichnung ist eine Auflichtanordnung, aber selbstverständlich ist die Erfindung auch bei einer in bekannter Weise daraus abzuleitenden Durchlichtanordnung voll anwendbar.

Das von jedem momentan beleuchteten Punkt des Objekts 8 reflektierte oder transmittierte Licht wird über das Objektiv 7, durch den Strahlteiler 11 und eine Feldlinse 12 auf eine Bildebene abgebildet, in der ein rasterförmiger Bilddetektor 9, insbesondere eine CCD-Array-Kamera, angeordnet ist. Die bildseitige optische Anordnung kann vollständig bekannten Fernsehmikroskopen entsprechen.

Die erfindungsgemäße Besonderheit besteht in der Verarbeitung der Bildsignale jedes Rasterpunktes (Pixels) des Bilddetektors 9 in der Auswertungseinrichtung 13. Die Auswertungseinrichtung 13 enthält einen schnellen Bildprozessor 14, der von der CCD-Array-Kamera 9 nur die Rasterpunkte, welche dem Bild der Lochrasterblende 6, das über das Objekt 8 auf der CCD-Array-Kamera 9 entsteht, entsprechen, ausliest und in einen Puffer-Bildspeicher 15 einliest.

Jeweils nach einer kleinen Rasterbewegung der Lochrasterblende 5 wird dies für etwas danebenliegende Rasterpunkte wiederholt, bis ein komplettes konfokales Bild im Puffer-Bildspeicher 15 angesammelt ist. Bei der Dimensionierung gemäß dem Beispiel mit 5% Transmission ergeben 20 Teilbilder ein komplettes Bild, wofür etwa 1 s benötigt wird. Dieses Bild wird dann einer Ausgabeeinheit 16, die z.B. einen Bildschirm enthält, zugeleitet.

Es ist dabei erforderlich, daß der schnelle Bildprozesesor 14 mit der bewegten Lochrasterblende 6 synchronisiert wird, um sicherzustellen, daß die richtigen Rasterpunkte des Bilddetektors 9 ausgelesen werden. Dazu ist ein Positionsdetektor 10 vorgesehen, der die Position der Lochrasterblende 6 auf einen Bruchteil des Lochdurchmessers genau mißt und damit den Bildprozessor 14 steuert.

Inkrementale fotoelektrische Positionsgeber mit Auflösung, Wiederholgenauigkeit und Langzeitstabilität kleiner als 1 µm sind in der Längen- und Winkelmeßtechnik verfügbar. Es kann damit als Maßstabsstruktur ein Ausschnitt des Lochrasters 6 selbst genutzt werden.

Es ist vorteilhaft, den Maßstab der Abbildung von dem Lochraster 6 auf den Bilddetektor 9 so zu wählen, daß das Bild eines Loches mehrere Pixel des Bilddetektors 9 überdeckt. Dann sind Abweichungen der Rasterstruktur zwischen beiden Bauelementen und relative Verdrehungen ohne Auflösungsverlust in ausreichendem Maß tragbar.

Dann kann der Vorteil der erfindungsgemäßen Anordnung voll ausgenutzt werden, daß der Abbildungsstrahlengang nicht bezüglich des Beleuchtungsstrahlengangs genau justiert werden muß, um die gleichen Löcher oder eine dazu kongruente Lochgruppe der gleichen Lochrasterscheibe zu treffen, wie das bei den meisten bekannten simultan konfokalen Anordnungen nötig ist. Die Auswahl der jeder Position des Lochrasters 6 gemäß dem Signal des Positionsdetektors 10 zugeordneten Pixel des Bilddetektors 9 durch den Bildprozessor 14 kann einmalig oder wiederholt durch Eichbilder bekannter Objekte 8 festgelegt und abgespeichert werden, wobei bekannte Verfahren der Kontrastbestimmung und -Maximierung Anwendung finden. Unregelmäßigkeiten und Exemplarstreuungen der Lochraster 6 oder Bilddeektoren 9 in der Serienproduktion können so aufgefangen werden. Zur schnellen Erzielung von Übersichtsbildern des Objekts 8 kann die Pixelselektion durch den Bildprozessor 14 ausgeschaltet werden, und bei einem einzelnen Scan gewinnt man ein lichtstärkeres Bild gewöhnlicher Auflösung ohne Umbauten der Optik und Mechanik.

Durch die konfokale Anordnung tritt grundsätzlich ein hoher Lichtverlust ein. Um dem zu begegnen, kann er CCD-Array-Detektor 9 in bekannter Weise durch einen vorgeschalteten Kanalplattenvervielfacher oder Nahfeldbildverstärker in seiner Empfindlichkeit gesteigert werden.

In der Zeichnung sind im Beleuchtungs- und Abbildungsstrahlengang optische Elemente 17 und 18 dargestellt, stellvertretend für beliebige Zusatzeinrichtungen in einem Mikroskop, wie z.B. Kantenfilter für die Fluoreszenzmikroskopie.

Die Ausführung der erfindungsgemäßen Anordnung ist nicht auf die Mikroskopie beschränkt. Hat das Objektiv 7 eine hohe chromatische Aberration und verwendet man eine Farbkamera als Bilddetektor 9, so erhält man einen Flächen-Profilsensor in Weiterbildung der aus WO 88/10 406 vorbekannten Anordnung.

## Patentansprüche

1. Anordnung zur konfokalen Bilderzeugung eines in einer Objektebene befindlichen Objekts (8) mit einer Beleuchtungsanordnung (1-4), welche ein bewegtes Raster (6) auf das Objekt abbildet, und mit einem Objektiv (7) zur Abbildung des Objekts und des ebenfalls in der Objektebene befindlichen Bilds des Rasters auf einen rasterförmigen Bilddetektor (9), dadurch gekennzeichnet, daß das Raster ein Lochraster ist, daß ein Lagemeßsystem (10) zur Ermittlung der aktuellen Lage des bewegten Lochrasters (6) vorgesehen ist, und daß eine Einrichtung (13) zur selektiven Detektorsignalauswertung vorgesehen ist, die, gesteuert durch das Lagemeßsystem, (10) jeweils nur die Bildsignale des Detektors (9) an den dem Bild des Lochrasters (6) auf dem Detektor (9) entsprechenden Stellen auswertet und seriell aus den Bildsignalen zu verschiedener Lage des Lochrasters (6) ein Gesamtbild erzeugt.

2. Anordnung nach Anspruch 1, **gekennzeichnet durch** die Ausbildung als Mikroskop.

3. Anordnung nach Anspruch 1, **gekennzeichnet durch** die Verwendung eines CCD-Detektors.

4. Anordnung nach Anspruch 3, **gekennzeichnet durch** die Vorschaltung eines Kanalplattenvervielfachers oder Nahfeldbildverstärkers vor den CCD-Detektor.

5. Anordnung nach Anspruch 3, **dadurch** **gekennzeichnet**, daß jedem Loch des Lochrasters (6) mehrere Pixel des CCD-Detektors (9) zugeordnet sind.

6. Anordnung nach Anspruch 1, **dadurch** **gekennzeichnet**, daß die Einrichtung (13) zur selektiven Detektorsignalauswertung einen schnellen Bildprozessor (14) und einen Puffer-Bildspeicher (15) enthält.

7. Anordnung nach Anspruch 1, **dadurch** **gekennzeichnet**, daß das Objektiv eine hohe chromatische Aberration aufweist und die Anordnung als Profilsensor verwendet wird.

## Claims

1. Arrangement for the confocal image production of an object (8), which is situated in an object plane, with an illuminating arrangement (1 to 4), which images a moved raster (6) onto the object, and with an objective (7) for the imaging of the object and of the image, which is likewise situated in the object plane, of the raster onto an image detector (9) of raster shape, characterised thereby, that the raster is a hole raster, that a position-measuring system (10) is provided for ascertaining the actual position of the moved hole raster (6) and that an equipment (13) is provided for the selective detector signal evaluation, which equipment under the control of the position-measuring system (10) each time evaluates only the image signals of the detector (9) at the places corresponding to the image of the hole raster (6) on the detector (9) and produces an entire image serially from the image signals at different positions of the hole raster (6).

2. Arrangement according to claim 1, characterised by the construction as microscope.

3. Arrangement according to claim 1, characterised by the use of a charge-coupled-device detector.

4. Arrangement according to claim 3, characterised by the series connection of a channel plate multiplier or a near field image amplifier in front of the charge-coupled-device detector.

5. Arrangement according to claim 3, characterised thereby, that several pixels of the charge-coupled-device detector (9) are associated with each hole of the hole raster (6).

6. Arrangement according to claim 1, characterised thereby, that the equipment (13) for the selective detector signal evaluation contains a fast image processor (14) and an image buffer storage device (15).

7. Arrangement according to claim 1, characterised thereby, that the objective displays a high chromatic aberration and the arrangement is used as profile sensor.

## Revendications

1. Agencement pour la génération des images à foyer commun d'un objet (8) se trouvant dans un plan d'objet avec un dispositif d'éclairage (1-4) qui représente une grille mobile (6) sur l'objet et avec un objectif (7) pour représenter l'objet et l'image se trouvant également dans le plan d'objet de la grille sur un détecteur d'images (9) en forme de grille, caractérisé en ce que la grille est une grille à trous, qu'il est prévu un système de mesure de position (10) pour déterminer la position actuelle de la grille à trous (6) déplacée et en ce qu'il est prévu un dispositif (13) pour l'analyse sélective des signaux du détecteur qui, commandé par le système de mesure de position (10), analyse respectivement seulement les signaux d'images du détecteur (9) aux emplacements correspondant à l'image de la grille à trous (6) sur le détecteur (9) et qui produit sériellement à partir des signaux d'images se rapportant à la position différente de la grille à trous (6) une image d'ensemble.

2. Agencement selon la revendication 1, caractérisé par la réalisation sous forme de microscope.

3. Agencement selon la revendication 1, caractérisé par l'utilisation d'un détecteur CCD.

4. Agencement selon la revendication 3, caractérisé par la disposition d'un multiplicateur de plaques à canaux ou d'un amplificateur d'images de champ proche devant le détecteur CCD.

5. Agencement selon la revendication 3, caractérisé en ce que plusieurs éléments d'image du détecteur CCD (9) sont associés à chaque trou de la grille à trous (6).

6. Agencement selon la revendication 1, caractérisé en ce que le dispositif (13) pour l'exploitation sélective des signaux du détecteur comprend un processeur d'images rapide (14) et une mémoire d'images tampon (15).

7. Agencement selon la revendication 1, caractérisé en ce que l'objectif présente une aberration chromatique élevée et que l'agencement est utilisé comme capteur de profil.
